# EUROPEAN PATENT SPECIFICATION

(11) **EP 0 602 755 B1**
(45) Date of publication and mention of the grant of the patent: **24.04.1996**
(21) Application number: 93203564.5
(22) Date of filing: 17.12.1993
(51) Int. Cl.: B60J 1/14

(54) **Double walled window**
Fenster mit Doppelverglasung
Fenêtre à double ultrage

(30) Priority: 17.12.1992 EP 92203996
(43) Date of publication of application: 22.06.1994
(73) Proprietor: POLYPLASTIC B.V., NL-3044 CK Rotterdam (NL)
(72) Inventor: Veeneman, Jan Peter, NL-5701 KK Helmond (NL); 't Hoen, Jan, NL-5701 KK Helmond (NL)
(74) Representative: Jilderda, Anne Ayolt

(56) References cited:
- EP-A- 0 298 788
- EP-A- 0 509 858
- GB-A- 2 172 551

## Description

The invention relates to a double-walled window comprising a substantially transparent outer pane and an inner pane which are interconnected at an edge portion of the window by means of at least an adhesion or fusion joint, while at least one of the two panes comprises a central portion which is in an offset position relative to the edge portion of the window.
The invention relates more in particular to such a window for use in a mobile living quarters unit such as a motorcar, a boat, a caravan or a camper.

A double-walled window of the kind mentioned in the opening paragraph is known from British Patent GB-A-2,172,551. A window is described therein with a substantially plane inner pane and a dish shaped outer pane, the central portion of the outer pane being offset in outward direction relative to an edge portion of the window. The two panes are glued together over their full circumference at the edge portion of the window.

A problem arising with such an interconnection is that the glue may flow out fairly irregularly during gluing together of the two panes, which may lead to disturbing stains and air inclusions which are both visible through the outer pane and render the window considerably less attractive. Similar problems arise when the two panes are fused together at a raised temperature in order to achieve the desired connection.

The invention has for its object inter alia to provide a window of the kind mentioned in the opening paragraph whose appearance is not marred by such imperfections.

According to the invention, a double-walled window of the kind mentioned in the opening paragraph is for this purpose characterized in that the window is provided with an opaque screening layer at the area of the edge portion, which screening layer is applied to the inside of the outer pane. The screening layer hides any stains or other imperfections in the interconnection of the panes from view at least from the outside, so that the visual appearance of the window is no longer impaired thereby.

By the application of the screening layer to the inside of the outer pane it is avoided that the screening layer is exposed to damage, especially of a mechanical kind, so that a durable screening effect is guaranteed. In addition, the screening layer does not result in an unevenness at the outside of the outer pane in this way, so that the window according to the invention can be manufactured with a perfectly smooth, plane outer pane. Such an unevenness would constitute an unattractive interruption of the otherwise smooth outside of the outer pane.

It was surprisingly found that, in spite of the presence of the screening layer in the connecting plane, an adequate connection between the two panes can nevertheless be achieved. With this is mind, in a preferred embodiment of the window according to the invention, the same or a similar basic material is used for the two panes and for the screening layer. Accordingly, in a particular embodiment of the invention, in which both panes comprise a synthetic resin from a group consisting of polymethyl-methacrylate and polycarbonate, a paint layer or coating based on acrylate or carbonate is used for the screening layer, as applicable. Such a paint layer or coating is preferably provided by means of spraying or a silk screen printing process.

The interconnection of the two panes is determined on the one hand by the glue or fusion joint between the inner pane and the screening layer, but on the other hand also depends on the adhesion of the screening layer to the outer pane. If the latter adhesion is itself insufficient for ensuring a satisfactory connection between the two panes, a special embodiment of the window according to the invention is characterized in that the screening layer is not continuous but instead locally provided with at least one interruption. In that case, the glue or molten material used can come into contact with the outer pane at the area of the interruption, so that a direct connection is created there, i.e. a connection without an interposed screening layer. Moreover, if the screening layer is accordingly provided with a large number of perforations than the adhesion layer may be checked, despite the presence of the screening layer, and if necessary replenished during assembly of the window.

In a further embodiment thereof, the screening layer is locally interrupted in that the layer locally comprises a raster of separate layer portions. The inter-spacings between the layer portions then ensure that a direct connection between the two panes is achieved, while they can be made small enough for the screening effect of the layer to be adequately maintained. In particular, the screening layer may be provided in such a manner along the entire inner and/or outer edge of the edge portion. In that case a good, direct connection between the two panes is obtained over the entire circumference of the window and an aesthetically highly attractive result can be achieved, in which the windows seem to have rounded corners.

The invention will now be explained in more detail with reference to an embodiment and a drawing in which:
- Fig. 1: is a cross-section of a portion of a wall of a caravan in which a window according to a first embodiment of the invention is accommodated;
- Fig.2: is a detailed view of a portion of the window of Fig. 1; and
- Fig.3: is a detailed view of a second embodiment of the window according to the invention.
The Figures are purely diagrammatical and not drawn to scale. Some dimensions are particularly exaggerated for the sake of clarity.

The wall 1 of the caravan comprises a comparatively hard and rigid inner shell 2 and outer shell 3 between which a comparatively thick insulating layer 4 is interposed which provides the desired heat insulation of the wall 1. Polystyrene or polyurethane foam is commonly used for the insulating layer 4. Usually, a wood laminate or a synthetic resin, such as acrylonitrile-butadienestyrene (ABS) and polyester, is used for the inner shell 2, while the outer shell 3 often comprises aluminium or polyester.

An opening 6 is provided in the wall at the area of the window 5. The opening is provided with a sealing 7 of rubber or another suitable elastomer over its entire circumference. The window 5 is connected to the outer shell 3 by means of a hinge 8 and can be opened to the outside. The Figure shows the window 5 in the closed state in which it bears with clamping force on the seal 7.

The window 5 comprises a dish-shaped inner pane 10 and a substantially plane outer pane 11. A central portion 12 of the inner pane 10 is accordingly offset relative to an edge portion 13 of the window 5. As a result, there is a gap 14 with a heat-insulating effect between the two panes 10,11. In the present case the two panes 10,11 are transparent and made from polymethyl-methacrylate, although within the scope of the invention alternative transparent materials may also be used in principle for the two panes of the present embodiment, for example, polycarbonate and glass. If so desired, an impurity may be added to the material of one of the two panes which partly absorbs sunlight and imparts a certain colour to the window.

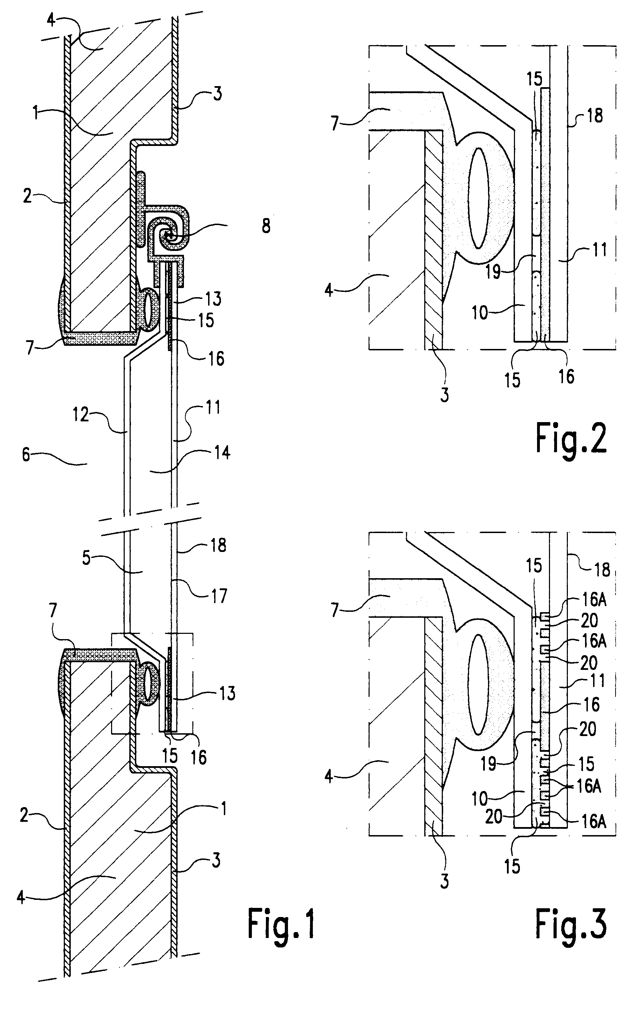

The panes 10,11 are glued together at the edge portion 13 over the entire circumference of the window 5. Fig. 2 shows the layer of glue 15 used for the interconnection of the two panes 10,11 in detail.

Stains and other visual imperfections sometimes arise in the glue layer 15 during gluing together of the panes 10,11 caused by the fact that the glue layer attacks the surfaces to be interconnected and flows out irregularly. The depicted glue layer contains, for example, an air inclusion 19. Similar problems arise when the panes 10,11 are not glued but fused together at an elevated temperature.

The wall 1 hides such imperfections from view inside the caravan. Besides, the stains can often be concealed at the inside behind the frame of a roller blind which is usually fitted in front of the opening.

To mask such stains also at the outside, the window 5 is provided with an opaque screening layer 16 at the area of the edge portion 13, which layer is applied to the inside 17 of the outer pane 11 according to the invention. In the window according to the invention, therefore, the screening layer 16 lies between the glue layer 15 and the outer pane 11 and thus hides any imperfections in the glue layer from view as seen from the outside. An acrylate-based coating is used for the screening layer 16 in the present case, applied by a silk screen printing process which is known per se. Alternatively, a paint layer may be used for the screening layer 16, provided by spraying or some other method. The colour of the layer 16 may be chosen at will, but is preferably harmonized with the colour of the rubber sealing 7 or the colour of the outer shell 3 of the wall 1.

The screening layer 16 is provided before the panes 10,11 are glued together. It was surprisingly found that, in spite of the presence of the screening layer 16, a satisfactory glued connection between the two panes 10,11 is nevertheless obtained. The quality of the connection is determined here both by the glued connection between the inner pane 10 and the screening layer 16 and by the adhesion of the screening layer 16 to the outer pane 11. Both components of the connection were found to be sufficiently strong in practice in the present case.

Provided as it is at the inside of the outer pane 11, the screening layer 16 is protected from external mechanical and/or chemical influences by the outer pane 11, which promotes a durable screening action and has the additional effect that any damage to the outer pane 11 may be simply restored with a polishing agent. Furthermore, the screening layer 16 thus does not form an unevenness at the outside 18 of the outer pane 11. Especially when the outer pane 11 lies at least substantially flush with the outer shell 3 of the wall 1, as in the present case, this leads to a particularly attractive aesthetic appearance, the screening layer 16 deriving its shine from the brightness effect of the outer pane.

Fig. 3 shows a detail of a second embodiment of the window according to the invention which provides an adequate interconnection of the inner and outer pane 10,11 even if the adhesion of the screening layer 16 to the outer pane 11 in itself should be insufficient for ensuring a reliable connection between the two panes 10,11. The screening layer 16 in this embodiment has at least one local interruption 20. Such an interruption may be, for example, a continuous void which is provided in the screening layer 16 over the entire circumference of the window, but it may alternatively consist of, for example, a (large) number of perforations provided in the screening layer 16, possibly but not necessarily following a continuous track. In the present example, the screening layer 16 is locally interrupted in that the layer comprises a raster pattern of separate layer parts 16A in the form of dots provided over the entire circumference of the window both at the inner edge and at the outer edge of the edge portion 13. The glue layer 15 can come into contact with the outer pane 11 through the interspacings 20 between the dots 16A so that a direct connection between the inner and outer pane 10,11 is obtained there, i.e. a connection without an interposed screening layer 16. In this case the adhesion of the screening layer 16 to the outer pane 11 is no longer a determining factor for the overall quality of the connection between the inner an outer pane 10,11. Due to the presence of the interspacings 20 in the screening layer 16, it is moreover possible in the present embodiment of the invention to check and if necessary replenish the glue layer 15 during assembly.

Although the invention was explained in detail with reference to a few embodiments only, it will be obvious that the invention is by no means limited to the examples given. On the contrary, many more variations and implementations are possible to those skilled in the art within the scope of the invention as defined in the claims.

Thus the invention may be applied, for example, to double-walled windows with a plane inner pane and a convex outer pane, or with two convex panes, and it may be advantageously applied to a double-walled window of which the inner pane is non-transparent but the outer pane transparent. Such windows are used as luggage gates or in lavatory rooms. The term "window" should furthermore be given a wide interpretation within the scope of the present patent such that it also includes doors.

The invention may also be used for windows which are mounted not directly into the wall of a mobile home but in a window frame, which frame when provided with the window and with the necessary hinges and locks, as applicable, is suitable for mounting in its entirety in such a wall.

## Claims

1. A double-walled window (5) comprising a substantially transparent outer pane (11) and an inner pane (10) which are interconnected at an edge portion (13) of the window by means of at least an adhesion or fusion joint (15), while at least one of the two panes (10, 11) comprises a central portion which is in an offset position relative to the edge portion of the window, characterized in that the window is provided with an opaque screening layer (16) at the area of the edge portion, which screening layer (16) is applied to the inside (17) of the outer pane (11).

2. A double-walled window as claimed in Claim 1, characterized in that the two panes (10, 11) and the screening layer (16) comprise the same or a similar basic material.

3. A double-walled window as claimed in Claim 2, characterized in that the two panes (10, 11) comprise a synthetic resin from a group consisting of polymethyl methacrylate and polycarbonate.

4. A double-walled window as claimed in at least one of the preceding Claims, characterized in that the screening layer (16) comprises a paint layer or coating which is provided by means of spraying or a silk screen printing process.

5. A double-walled window as claimed in at least one of the preceding Claims, characterized in that the outer pane (11) is substantially plane.

6. A double-walled window as claimed in at least one of the preceding Claims, characterized in that the screening layer (16) is locally provided with at least one interruption (20).

7. A double-walled window as claimed in Claim 6, characterized in that the screening layer is locally interrupted in that the screening layer (16) locally comprises a raster pattern of separate layer portions.

8. A double-walled window as claimed in Claim 7, characterized in that the raster pattern extends at the inner and/or outer edge of the edge portion (13) over the entire circumference of the window.

## Patentansprüche

1. Ein Fenster mit Doppelverglasung (5), das aus einer im wesentlichen transparenten äußeren Scheibe (11) und einer inneren Scheibe (10) besteht, die im Kantenbereich (13) des Fensters mittels zumindest einer Klebe- oder Schmelzverbindung (15) miteinander verbunden sind, während zumindest eine der beiden Scheiben (10,11) einen mittleren Abschnitt hat, der sich bezogen auf den Kantenbereich des Fensters versetzt befindet, dadurch gekennzeichnet, daß das Fenster im Kantenbereich mit einer undurchsichtigen Deckschicht (16) versehen ist, welche Deckschicht (16) auf der Innenseite (17) der äußeren Scheibe aufgetragen ist.

2. Ein Fenster mit Doppelverglasung nach Anspruch 1, dadurch gekennzeichnet, daß die beiden Scheiben (10,11) und die Deckschicht (16) aus demselben oder einem ähnlichen Grundwerkstoff bestehen.

3. Ein Fenster mit Doppelverglasung nach Anspruch 2, dadurch gekennzeichnet, daß die beiden Scheiben (10,11) aus einem Kunstharz aus der Gruppe der Polymethylmethacrylate und Polycarbonate bestehen.

4. Ein Fenster mit Doppelverglasung nach mindestens einem der vorgenannten Ansprüche, dadurch gekennzeichnet, daß die Deckschicht (16) aus einer Farblage oder Schicht besteht, die durch Sprühen oder mittels Siebdruck aufgetragen wird.

5. Ein Fenster mit Doppelverglasung nach mindestens einem der vorgenannten Ansprüche, dadurch gekennzeichnet, daß die äußere Scheibe (11) im wesentlichen eben ist.

6. Ein Fenster mit Doppelverglasung nach mindestens einem der vorgenannten Ansprüche, dadurch gekennzeichnet, daß die Deckschicht (16) örtlich mit mindestens einer Unterbrechung (20) versehen ist.

7. Ein Fenster mit Doppelverglasung nach Anspruch 6, dadurch gekennzeichnet, daß die Deckschicht örtlich unterbrochen ist, indem die Deckschicht (16) örtlich ein Rastermuster aus getrennten Schichtanteilen aufweist.

8. Ein Fenster mit Doppelverglasung nach Anspruch 7, dadurch gekennzeichnet, daß das Rastermuster sich an der Innenkante und/oder Außenkante des Kantenbereichs (13) über den gesamten Umfang des Fensters erstreckt.

## Revendications

1. Une fenêtre à double vitrage (5) comprenant une vitre extérieure très transparente (11) et une vitre extérieure (10), qui sont connectées à un bord au-tour de la fenêtre (13) au moyen d'au moins un joint d'adhésion ou de fusion (15), tandis qu'au moins l'une des deux vitres (10,11) comprend une partie centrale qui se trouve dans une position en coude par rapport au bord autour de la fenêtre,
caractérisée en ce que la fenêtre est munie d'une couche écran opaque (16) dans la zone autour de la fenêtre, cette couche écran (16) étant appliquée à l'intérieur (17) de la vitre extérieure (11).

2. Une fenêtre à double vitrage comme revendiqué dans la revendication 1,
caractérisée en ce que les deux vitres (10,11) et la couche écran (16) comprennent un matériau de base identique ou similaire.

3. Une fenêtre à double vitrage comme revendiqué dans la revendication 2,
caractérisée en ce que les deux vitres (10,11) comprennent une résine synthétique d'un groupe consistant en polyméthacrylate et en polycarbonate.

4. Une fenêtre à double vitrage comme revendiqué dans au moins l'une des revendications précédentes,
caractérisée en ce que la couche écran (16) comprend une couche de peinture ou un revêtement qui est appliqué par vaporisation ou par un procédé de sérigraphie.

5. Une fenêtre à double vitrage comme revendiqué dans au moins l'une des revendications précedentes,
caractérisée en ce que la vitre extérieure (11) est extrêmement plane.

6. Une fenêtre à double vitrage comme revendiqué dans au moins l'une des revendications précedentes,
caractérisée en ce que la couche écran (16) est munie localement d'au moins une interruption (20).

7. Une fenêtre à double vitrage comme revendiqué dans la revendication 6,
caractérisée en ce que la couche écran est localement interrompue en ce que la couche écran (16) comprend localement un motif grillagé de parties de couches séparées.

8. Une fenêtre à double vitrage comme revendiqué dans la revendication 7,
caractérisée en ce que le motif grillagé s'étend au bord interne et/ou externe de la partie rebord (13) sur l'entière circonférence de la fenêtre.
